# NEUE EUROPÄISCHE PATENTSCHRIFT

(11) **EP 0 195 123 B2**
(45) Veröffentlichungstag und Bekanntmachung des Hinweises auf die Entscheidung über den Einspruch: **11.10.1995**
(45) Hinweis auf die Patenterteilung: 22.08.1990
(21) Anmeldenummer: 85115448.4
(22) Anmeldetag: 05.12.1985
(51) Int. Cl.: B60N 2/06

(54) **Längsverstellvorrichtung für Fahrzeugsitze mit einem Antriebsmotor und zwei Schienen**
Longitudinal adjusting arrangement for vehicle seats with a driving motor and two rails
Mécanisme de déplacement longitudinal pour sièges de véhicule ayant un moteur de commande et deux rails

(30) Priorität: 17.01.1985 DE 3501442
(43) Veröffentlichungstag der Anmeldung: 24.09.1986
(73) Patentinhaber: C. Rob. Hammerstein GmbH, D-42699 Solingen (DE)
(72) Erfinder: Bauer, Heinz, D-5650 Solingen 11 (DE); Becker, Burckhard, Dipl.-Ing., D-5650 Solingen 1 (DE); Frohnhaus, Ernst-Reiner, D-5650 Solingen 11 (DE); Koeppen, Rudolf, D-4050 Mönchengladbach 1 (DE); Gedig, Alfred, Dipl.-Ing., D-5650 Solingen 11 (DE)
(74) Vertreter: Bauer, Wulf, Dr.

(56) Entgegenhaltungen:
- DE-A- 3 321 869
- DE-A- 3 321 930
- DE-B- 1 630 977
- DE-B- 1 655 140
- DE-B- 2 047 532
- GB-A- 583 953
- GB-A- 1 105 981
- US-A- 2 335 254
- US-A- 4 257 286
- US-A- 4 355 778

## Beschreibung

Die Erfindung bezieht sich auf eine Längsverstellvorrichtung nach dem Oberbegriff des Patentanspruchs 1.

Bei der aus der US-A-4 355 778 vorbekannten Längsverstellvorrichtung der eingangs genannten Art greift ein Ritzel in Zähne einer Zahnstange, die Eingriffstiefe wird dadurch innerhalb gewisser Grenzen konstant gehalten, daß die Zahnstange im Befestigungsbereich mittels eines Nietes gelenkig an einem mit der Bodenschiene verbundenen Flansch angeordnet ist. Im Befestigungsbereich durchgreift ein mit der Zahnstange verbundener Niet ein Langloch im Flansch, wodurch ein gewisser Schwenkbereich der Zahnstange um den gelenkartigen Befestigungsbereich festgelegt wird. Damit die Zahnstange die jeweils richtige Position zum Ritzel einnimmt, rollt auf ihrer Unterseite eine mit dem Ritzel verbundene Führungsrolle ab. Dadurch wird die Zahnstange zwischen Ritzel und Führungsrolle geführt.

Diese vorbekannte Anordnung ist einerseits im Aufbau aufwendig, andererseits neigt sie zum Verklemmen. Ein praktisch geräuschfreier Antrieb läßt sich nicht dauerhaft aufrechterhalten, insbesondere ist eine Klapperfreiheit nicht gewährleistet.

Um hier Abhilfe zu schaffen, ist es aus der DE-A-33 21 930 bereits bekannt, die aus Antriebsmotor, Welle und Ritzel bestehende Antriebseinheit in Eingriffsrichtung der Zähne von Zahnstange und Ritzel verschiebbar insbesondere schwenkbar, an der zugeordneten Schiene zu halten. Die Zahnstange ist dabei starr mit der Bodenschiene verbunden. Diese Anordnung hat sich bewährt, benötigt aber eine besondere Lagerung und Aufhängung der Antriebseinheit.

Aus der US-A-4 257 286 ist ein Präzisionsantrieb mit einer Zahnstange und einem Ritzel vorbekannt, bei dem ein stets guter Eingriff zwischen Ritzel und Zahnstange über die gesamte Länge der Zahnstange dadurch erreicht wird, daß an den Enden der Zahnstange elastische Teile vorgesehen sind, die die Zahnstange mit einem Tragteil, an dem die Befestigung erfolgt, verbinden. Die Zahnstange ist aus Kunststoff hergestellt. Der vorbekannte Präzisionsantrieb ist für Antriebe in optischen Instrumenten, beispielsweise Meßinstrumenten, vorgesehen.

Ausgehend von der Längsverstellvorrichtung der eingangs genanten Art liegt der vorliegenden Erfindung die Aufgabe zugrunde, die Nachteile dieser vorbekannten Längsverstellvorrichtung zu vermeiden und die vorbekannte Längsverstellvorrichtung dahingehend zu verbessern, daß sie einfacher und kostengünstiger herstellbar ist.

Ausgehend von der vorbekannten Längsverstellvorrichtung (US-A-4355 778) wird diese Aufgabe gelöst durch eine Längsverstellvorrichtung für Fahrzeugsitze mit den Merkmalen des Patentanspruchs 1.

Die erfindungsgemäße Längsverstellvorrichtung hat den Vorteil eines äußerst einfachen Aufbaus, denn im Vergleich zu den oben genannten Längsverstellvorrichtungen sind wesentlich weniger Einzelteile notwendig. Durch die elastische Vorbelastung der Zahnstange in dem mindestens einen Haltebereich wird eine Klapperfreiheit erreicht. Gegenüber den Längsverstellvorrichtungen nach dem genannten Stand der Technik besteht der entscheidende Vorteil, daß die entscheidenden Komponenten geschützt innerhalb des Innenkanals der aus den zwei Schienen gebildeten Längsführung untergebracht werden. Demgegenüber befinden sich Ritzel, Zahnstange und Führungsrolle bei der Längsverstellvorrichtung nach der US-PS 4,355,778 außerhalb der Schienen der Längsführung und sind daher frei zugänglich, ihre Funktion kann durch Schmutz oder insbesondere durch größere Fremdkörper beeinträchtigt werden. Ebenso befindet sich der Schwenkmechanismus bei der Längsverstellvorrichtung nach der genannten DE-OS 33 21 930 außerhalb der Sitzschiene.

Die erfindungsgemäße Längsverstellvorrichtung hat den Vorteil, daß die Welle unmittelbar in der zugehörigen Schiene, zumeist in der Sitzschiene, gelagert werden kann. Dies ermöglicht einen kompakten, klapperfreien Aufbau der Längsverstellvorrichtung. Der Befestigungsbereich befindet sich vorteilhafterweise in unmittelbarer Nähe eines Befestigungspunktes der zugehörigen Schiene am Fahrzeug, also zumeist der Bodenschiene am Boden des Fahrzeuges. Dadurch kann im Befestigungsbereich die Zahnstange in Form einer Gelenkverbindung oder sogar weitgehend starr an der zugehörigen Schiene festliegen, ohne daß Eingriffsfehler zwischen Ritzel und Zahnstange auftreten können. Die elastischen Verformungen der Schienen auf Grund von Belastungen machen sich insbesondere im Abstand von den Befestigungspunkten der Schiene am Fahrzeug bemerkbar. In diesen Bereichen wirkt erfindungsgemäß die elastische Anordnung der Zahnstange. Dadurch ist die Zahnstange in der Lage, die elastischen und/oder dauerhaften Verformungen der Schienen nachzuvollziehen und sich den örtlichen Erfordernissen in Abhängigkeit von Belastung und Verschiebezustand der Längsverstellvorrichtung anzupassen. Für diese Eigenschaft ist die Federbelastung der Zahnstange so ausgebildet, daß die Zahnstange an allen Orten des Verschiebeweges bei geringerer Kraft einfedert, als für die Verformung der Längsführung notwendig ist. Anders ausgedrückt ist die Federkonstante der elastischen Vorbelastung der Zahnstange an allen Orten des Verschiebeweges geringer als die Federkonstante der Längsführung aus den beiden Schienen. Die Federkonstante der die Zahnstange belastenden Feder ist allerdings ausreichend stark, um den notwendigen Anpreßdruck zwischen Ritzel und Zahnstange zu sichern.

In vorteilhafter Ausbildung der Erfindung hat die Zahnstange Steckbefestigungsbereiche, so daß sie durch Öffnungen in der zugehörigen Schiene eingesteckt werden kann und weitere Befestigungsmittel nicht notwendig sind. Hierdurch wird die Montage vereinfacht. Zugleich ergibt sich die Möglichkeit, eine für die Steckbefestigung vorteilhafte Feder zugleich für die erfindungsgemäße elastische Anordnung der Zahnstange heranzuziehen.

Weitere Vorteile und Merkmale der Erfindung ergeben sich aus den übrigen Ansprüchen sowie der nun folgenden Beschreibung mehrerer, nicht einschränkend zu verstehender Ausführungsbeispiele, die unter Bezugnahme auf die Zeichnung näher erläutert werden. In dieser zeigen:
Fig. 1 eine (teilweise schnittbildliche) Seitenansicht einer Längsführung für Fahrzeugsitze mit elastisch ausgebildeter Zahnstange, der Fahrzeugsitz befindet sich in der vordersten Verschiebungsstellung,
Fig. 2 eine Darstellung der Vorrichtung gemäß Figur 1, jedoch in hinterster Position des Fahrzeugsitzes, Diese Ausführung dient der Erläuterung, sie fällt nicht vollständig unter den wertlaut des Anspruchs 1,
Fig. 3 eine Darstellung der Erfindung mit separaten Federn,
Fig. 4 eine Darstellung ähnlich Figur 3 mit geänderter Ausbildung der separaten Federn,
Fig. 5 eine teilweise schnittbildliche Darstellung eines Endbereichs von Bodenschiene und Zahnstange mit speziell ausgebildeter, separater Feder,
Fig. 6 eine Darstellung ähnlich Figur 5, jedoch mit geänderter Ausbildung der Feder, und
Fig. 7 ein Schnittbild entlang der Schnittlinie XI-XI in Figur 6 ohne Darstellung der Bodenschiene.

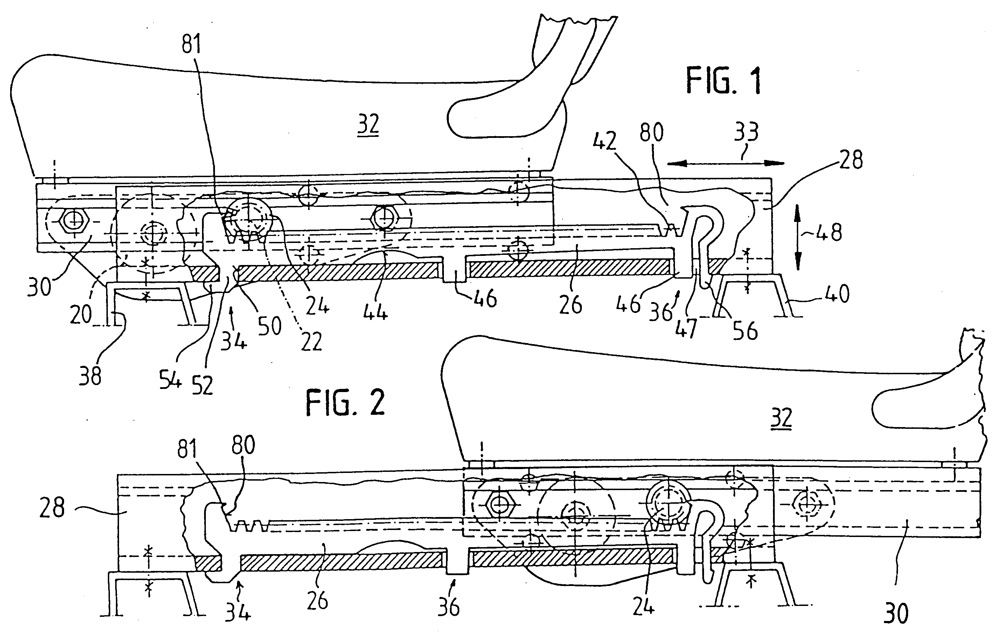

Die Längsverstellvorrichtung gemäß den Figuren 1 und 2 hat einen Antriebsmotor 20, der über eine Welle 22 ein Ritzel 24 antreibt. Dieses Ritzel 24 kämmt mit einer Zahnstange 26, die mit einer Bodenschiene 28 verbunden ist. Letztere bildet zusammen mit einer Sitzschiene 30 eine Längsführung, die Sitzschiene 30 ist mit einem Fahrzeugsitz 32 verbunden, dieser kann zwischen den beiden Positionen der Figur 1 und der Figur 2 stufenlos in Längsrichtung der Schienen 28, 30 (Verschieberichtung 33) verstellt werden.

Die Bodenschiene 28 ist im vorderen Bereich (in den Figuren links) in einem Befestigungspunkt mit einer Konsole 38 fest verbunden, ebenso liegt ihr rückwärtiges Ende über eine hintere Konsole 40 fest. In Nähe der vorderen Konsole 38 ist die Zahnstange 26 in einem Befestigungsbereich 34 mit der Bodenschiene 28 so verbunden, daß die Zahnstange 26 in Verschieberichtung 33 nicht gegenüber der Bodenschiene 28 bewegbar ist. Zugleich wird durch die spezielle Ausbildung des gezeigten Befestigungsbereiches der linke Teilbereich der Zahnstange 26, der etwa ein Viertel ihrer Gesamtlänge ausmacht, entlang seiner unteren Kante in Anlage an die Oberseite der Basis der Bodenschiene 28 gebracht. Die Zahnstange 26 hat hierdurch in ihrem linken Viertel voll mit der sie tragenden Bodenschiene 28 Kontakt. Gegenüber der Gelenkbefestigung mittels eines Nietes bei der Längsverstellvorrichtung nach der genannten US-A-4355778 liegt die Zahnstange 26 somit sicherer und insbesondere klapperfreier an der Bodenschiene 28 an.

Die Zahnstange 26 hat eine Eigenelastizität, sie wirkt in Richtung ihrer Zähne 42 als Feder. Dies wird insbesondere durch eine Ausnehmung 44 unterstützt, die sich hinter dem linksseitigen, oben beschriebenen Kontakt-bereich mit der Bodenschiene 28 befindet und bewirkt, daß der rechts von der Ausnehmung 44 befindliche Teil der Zahnstange 26 lastabgestimmt einfedern kann. Die Zahnstange 26 wird durch Haltebereiche 36 in Querrichtung zur Darstellungsebene der Figuren 1 und 2 fixiert. Diese Haltebereiche 36 umfassen im konkreten Ausführungsbeispiel einstückig mit der Zahnstange 26 verbundene Zapfen 46 und Führungslöcher 47 in der Basis der Bodenschiene 28. In den Haltebereichen 36 liegt die Zahnstange 26 weder in Verschieberichtung 33 noch quer hierzu in Federrichtung (Doppelpfeil 48) fest.

Die Verbindung zwischen Zahnstange 26 und Bodenschiene 28 ist in Form einer Steckbefestigung ausgeführt. Hierzu ist ein formschlüssig in eine Paßausnehmung 50 der Bodenschiene 28 eingreifender, einstückig mit der Zahnstange 26 verbundener Zapfen 52, der sich am linken, vorderen Ende der Zahnstange 26 befindet, durch eine in Form eines L-Schenkels nach vorn vorspringende Nase 54 fortgesetzt, die mit ihrer Oberkante im gezeichneten Montagezustand elastisch federnd an der Unterseite der Basis der Bodenschiene 28 anliegt. Hierdurch wird der rechte Endbereich der Zahnstange 26 nach oben vorbelastet. Dieser Endbereich wird jedoch durch eine federnd ausgebildete Rückhaltenase 56 fixiert.

Bei der Montage wird die Zahnstange 26 zunächst gegenüber der Bodenschiene 28 schräg gehalten und mit ihrer Nase 54 durch die Paßausnehmung 50 so in die Bodenschiene 28 gesteckt, daß der Zapfen 52 in die Paßausnehmung 50 hineingelangt. Hierbei wird der rechte, hintere Endbereich der Zahnstange 26 nach unten gedrückt, bis die federnd ausgebildete Rückhaltenase 56 durch das hintere Führungsloch 47 gelangt und die in Figur 1 gezeigte Position einnimmt. Die spezielle Ausbildung der Rückhaltenase 56, die einstückig mit der Zahnstange 26 zusammenhängt, gewährleistet eine elastische Anlage am rechten Rand des rechten Führungsloches 47, wie in Figur 1 dargestellt. Andererseits ist eine Federbewegung der Zahnstange 26 rechts von ihrer Ausnehmung 44 und im Sinne des Doppelpfeils 48 möglich, wie ein Vergleich der Figuren 1 und 2 zeigt. In der Figur 2 ist der rechte Endbereich gegenüber der Darstellung in Figur 1 eingefedert, die Kante der Rückhaltenase 56 ist nicht in Anlage an der Unterseite der Bodenschiene 28.

Die elastische Ausbildung oder Vorbelastung der Zahnstange 26 ist grundsätzlich von der Ausbildung der Befestigung zwischen Zahnstange 26 und Bodenschiene 28 unabhängig. Die gezeigte Steckbefestigung erleichtert die Montage, diese Steckbefestigung ist aber nicht zwingend erforderlich. Im gezeigten Ausführungsbeispiel nach den Figuren 1 und 2 ergänzen sich jedoch die gewählte Art der Steckbefestigung und die elastische Ausbildung der Zahnstange 26 dahingehend, daß durch die Rückhaltenase 56 zugleich die oberste Position der Zahnstange 26 im Sinne eines Federanschlages vorgegeben wird. Die Einfederbewegung nach unten wird dadurch begrenzt, daß die Zahnstange 26 an ihrer Unterkante in Kontakt mit der Oberseite der Basis der Bodenschiene 28 kommt. Diese Position ist in den Figuren nicht dargestellt, vielmehr ist aus den Figuren stets ein Freiraum zwischen Oberseite der Basis der Bodenschiene 28 und Unterseite der Zahnstange 26 ersichtlich.

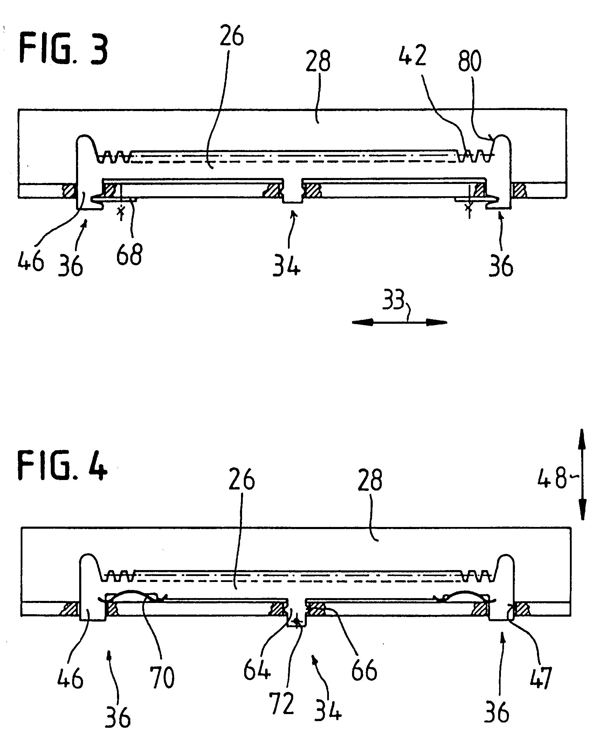

Im Ausführungsbeispiel nach Figur 3 sind die beiden endseitigen Haltebereiche durch separate Federn abgestützt. Diese separaten Federn sind als Blattfedern 68 ausgebildet, die in V-förmige Einschnitte an endseitigen Zapfen 46 der Haltebereiche 36 greifen, die einander zugewandt sind. Hierdurch wird die Zahnstange 26 in Position gehalten. Dadurch muß aber auf eine Steckbefestigung verzichtet werden.

Das Ausführungsbeispiel nach Figur 4 hat weitgehende Übereinstimmung mit dem Ausführungsbeispiel nach Figur 3, jedoch sind die (außenliegenden) Blattfedern 68 ersetzt durch innenliegende, gewellte Federn 70, die zwischen der Unterseite der Enden der Zahnstange 26 und der Oberseite der Basis der Bodenschiene 28 angeordnet sind. Um zu vermeiden, daß die Zahnstange 26 durch die Kraft dieser Federn 70 zu weit angehoben wird, ist im mittigen Zapfen 64, an dem die Auswölbungen 66 vorgesehen sind, ein Loch 72 ausgebildet, durch das ein Stift gesteckt werden kann, der quer zur Zeichenebene verläuft und an der Unterfläche der Bodenschiene 28 anliegt. Zugleich wird hierdurch die Gelenkwirkung des speziell ausgebildeten Befestigungsbereiches 34 unterstützt.

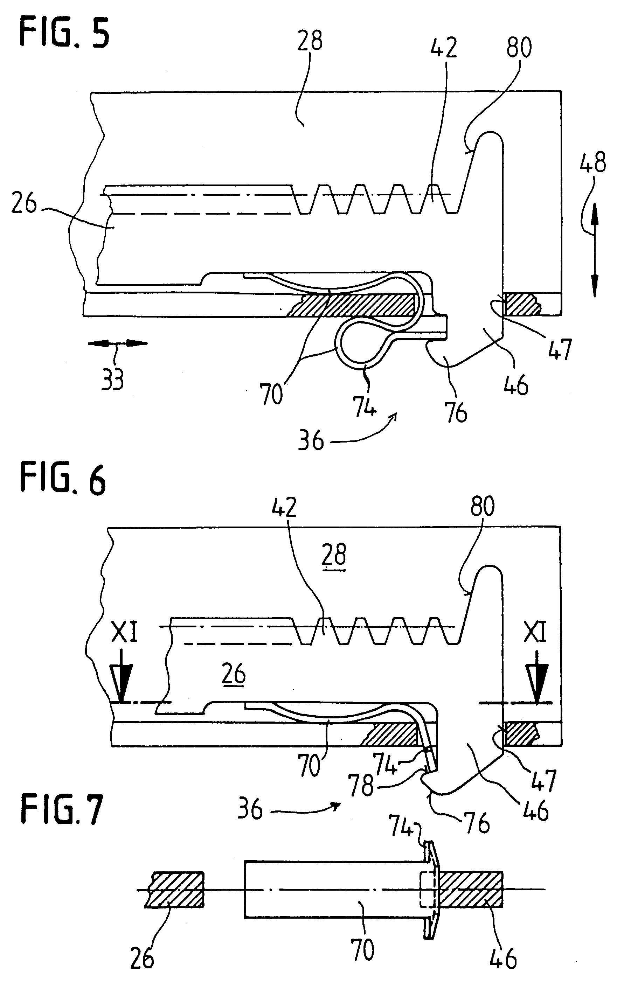

In den beiden letzten Ausführungsbeispielen nach Figur 5 sowie den Figuren 6 und 7 ist diese Feder 70 so weitergebildet, daß sie einerseits eine Steckbefestigung ermöglicht und andererseits, ebenso wie die Blattfeder 68, die Positionierung und Lagerung der Zahnstange 26 übernehmen kann. Hierzu ist im Ausführungsbeispiel nach Figur 5 die wellenförmige Feder 70 durch die Ausnehmung 47 nach unten geführt und geht dort in einen schleifenförmigen Bereich über, der in einem im wesentlichen parallel zur Zahnstange 26 verlaufenden, nach unten federnd vorbelasteten Bereich 74 endet. Diese spezielle Feder 70 hat somit drei Funktionen: Sie drückt einerseits das Ende der Zahnstange 26 nach oben von der Bodenschiene 28 weg. Zweitens umgreift sie die Basis der Bodenschiene und liegt sowohl an der oberen wie an der unteren Oberfläche dieser Basis an, wodurch die Feder 70 selbst festliegt, Schließlich drückt sie mit dem endseitigen Bereich 74, der die untere Schlaufe nach außen hin abschließt, eine Nase 76 im Zapfen 46 nach unten, gegen die Wirkung ihres zwischen der Unterkante der Zahnstange 26 und der Oberseite der Basis der Bodenschiene 28 befindlichen Teilbereichs.

Die Ausnehmung 47 ist, wie bei allen beschriebenen Haltebereichen 36 der Fall ist, in Verschieberichtung 33 ausreichend groß, so daß beidseits des Zapfens 46 Freiräume bleiben, die ein freies Kippen der Zahnstange 26 gegenüber der Bodenschiene 28 ermöglichen.

Im letzten Ausführungsbeispiel nach den Figuren 6 und 7 ist die Feder 70 in ihrem unteren, nach unten durch die Ausnehmung 47 reichenden Bereich so ausgebildet, daß eine Steckbefestigung ermöglicht wird. Der nach unten vorstehende Bereich der Feder 70 erweitert sich, er hat zwei Schultern 74, die sich an der Unterseite der Basis der Bodenschiene 28 abstützen.

Die Steckbefestigung in den Ausführungsbeispielen nach den Figuren 5 und 6, 7 verläuft wie folgt: Die Zapfen 46 haben an ihrem unteren, freien Ende eine Abrundung 76, die in eine im wesentlichen parallel zur Verschieberichtung 33 verlaufende Abstützungsfläche 78 übergeht, wodurch die beschriebene Nase gebildet wird. Wenn der Zapfen 46 in die Ausnehmung 47 gedrückt wird, verdrängt die Abrundung 26 zunächst den Bereich 74, der dann, wenn der Zapfen 46 genügend tief eingedrückt ist, jedoch selbstätig (Figur 6) oder gegebenenfalls mit Unterstützung eines Werkzeugs in die Ausnehmung des Zapfens 46 einschnappt und an der Abstützungsfläche anliegt.

In den beiden Ausführungsbeispielen nach den Figuren 5 und 6, 7 ist lediglich die Ausführung eines Haltebereichs 36 gezeigt. Die beiden Haltebereiche 36 können mit jedem beliebigen Befestigungsbereich entsprechend der vorangegangenen Ausführungsbeispiele kombiniert werden.

In allen Ausführungsbeispielen befinden sich an beiden Enden der Verzahnung der Zahnstange 26 Anschlagschultern 80 für das Ritzel 24. Hierdurch wird der maximale Bewegungsbereich des Ritzels 24 vorgegeben und verhindert, daß das Ritzel 24 endseitig von den Zähnen 42 der Zahnstange abrutscht.

Daneben ist nach den Figuren 1 und 2 an den Enden des Bewegungsbereichs des Ritzels 24 jeweils ein Nocken 81 vorgesehen, der im wesentlichen quer zur Richtung der Zähne 42 vorspringt und so angeordnet ist, daß er in der Endstellung mit seiner unteren Flanke in Berührung mit dem Zahn des Ritzels kommt, der an die Anschlagschulter 80 anschlägt. Dadurch wird verhindert, daß sich dieser Zahn und damit das Ritzel bei Weiterführung der Bewegung in Richtung 48 bewegen kann.

## Patentansprüche

1. Längsverstellvorrichtung für Fahrzeugsitze mit einem Antriebsmotor (20) der über eine Welle (22) ein Ritzel (24) antreibt und einer Zahnstange (26), die mit diesem Ritzel (24) in Eingriff steht, und mit zwei länglichen, ineinander geführten und gegen einander in einer Verschieberichtung (33) verschiebbaren Schienen (28,30), von denen eine (30) die Welle (22) und das Ritzel (24) trägt und die andere (28) mit der Zahnstange (26) verbunden ist, wobei diese Verbindung in einem Befestigungsbereich (34), in dem die Zahnstange (26) in Verschieberichtung (33) an der Schiene (28) festliegt und einem Haltebereich (36) erfolgt, in dem die Zahnstange (26) in Richtung ihrer Zähne (42) gegenüber der Schiene (28) bewegbar ist,
dadurch gekennzeichnet, daß die Zahnstange (26) elastisch in Richtung zum Ritzel (24) hin vorbelastet ist, und zwar durch eine separate Druckfedervorrichtung (68, 70) daß die Zahnstange (26) an allen Orten des Verschiebeweges bei geringerer Kraft einfedert, als für die Verformung der aus den beiden Schienen (28, 30) gebildeten Längsführung notwendig ist,
und daß Ritzel (24) und Zahnstange (26) innerhalb der aus den beiden Schienen (28, 30) gebildeten Längsführung untergebracht sind.

2. Längsverstellvorrichtung nach Anspruch 1, dadurch gekennzeichnet, daß der Zapfen (52) mit zwei gegenständigen Auswölbungen (66) an den Wänden der Paßausnehmung (50) in Richtung der Zähne (42) gleitend bewegbar anliegt.

3. Längsverstellvorrichtung nach Anspruch 1 oder 2, dadurch gekennzeichnet, daß ein Haltebereich (36) einen in Gegenrichtung zu den Zähnen (42) an der Zahnstange (26) und vorzugsweise einstückig vorspringenden Zapfen (46) aufweist, der in ein Führungsloch (47) der zugehörigen Schiene (28) dergestalt greift, daß in Verschieberichtung (33) zu beiden Seiten des Zapfens (46) ein Luftspalt verbleibt, der Zapfen (46) an den quer zur Verschieberichtung (33) verlaufenden Wandungen des Führungsloches (47) aber weitgehend spielfrei anliegt.

4. Längsverstellvorrichtung nach Anspruch 3, gekennzeichnet durch zwei Haltebereiche (36), von denen mindestens einer an einem Ende der Zahnstange (26) vorgesehen ist und der andere sich auf der Mitte oder an dem anderen Ende der Zahnstange (26) befindet.

5. Längsverstellvorrichtung nach einem der Ansprüche 1 bis 4, dadurch gekennzeichnet, daß den endseitigen Haltebereichen (36) eine separate Feder (68, 70) zugeordnet ist.

6. Längsverstellvorrichtung nach Anspruch 5, dadurch gekennzeichnet, daß an der zugehörigen Schiene (28) eine Blattfeder (68) befestigt ist, die sich auf der den Zähnen (42) gegenüberliegenden Seite dieser Schiene (28) befindet und in eine Ausnehmung an der Innenseite der Zapfen (46) paßgenau eingreift.

7. Längsverstellvorrichtung nach Anspruch 5, dadurch gekennzeichnet, daß eine wellenförmige Druckfeder, (70) zwischen der Unterseite der Zahnstange (26) und der zugewandten Fläche der Bodenschiene (28) angeordnet ist.

8. Längsverstellvorrichtung nach Anspruch 7, dadurch gekennzeichnet, daß die Feder (70) durch ein Führungsloch (47) der Bodenschiene (28) geführt ist, sich mit einer Schlaufe oder einer Anschlagschulter an der gegenüberliegenden Außenfläche der Bodenschiene (28) abstützt und einen elastisch federnden Bereich (74) aufweist, der an einer Abstützungsfläche des Zapfens (46) elastisch anliegt.

## Claims

1. Longitudinal adjusting arrangement for vehicle seats, having a drive motor (20) which drives a pinion (24) via a shaft (22), and a toothed rack (26) which engages with this pinion (24), and having two elongate rails (28, 30) guided in one another and displaceable with respect to one another in a direction of displacement (33), of which one (30) carries the shaft (22) and the pinion (24) and the other (28) is connected to the toothed rack (26) this connection taking place in a fastening region (34) in which the toothed rack (26) is fixed in the direction of displacement (33) against the rail (28) and a holding region (36) in which the toothed rack (26) is movable in the direction of its teeth (42) with respect to the rail (28), characterized in that the toothed rack (26) is pre-loaded resiliently in the direction of the pinion (24), namely by a separate pressure spring means (68, 70), in that the toothed rack (26) contracts resiliently at all positions on the displacement path with a smaller force than is required for deformation of the longitudinal guide formed from the two rails (28, 30), and in that the pinion (24) and the toothed rack (26) are lodged within the longitudinal guide formed from the two rails (28, 30).

2. Longitudinal adjusting arrangement according to Claim 1, characterized in that the lug (52) bears slidably movably in the direction of the teeth (42) by means of two opposing convexities (66) against the walls of the fitting cutout (50).

3. Longitudinal adjusting arrangement according to Claim 1 or 2, characterized in that a holding region (36) has a lug (46) projecting in the opposite direction to the teeth (42) on the toothed rack (26) and preferably being in one piece, engaging in a guide hole (47) of the associated rail (28) such that there remains in the direction of displacement (33) on both sides of the lug (46) an air gap, but the lug (46) bears substantially without play against the walls of the guide hole (47) extending transversely to the direction of displacement (33).

4. Longitudinal adjusting arrangement according to Claim 3, characterized by two holding regions (36), of which at least one is provided at one end of the toothed rack (26) and the other is located at the centre or at the other end of the toothed rack (26).

5. Longitudinal adjusting arrangement according to one of Claims 1 to 4, characterized in that a separate spring (68, 79) is associated with the terminal holding regions (36).

6. Longitudinal adjusting arrangement according to Claim 5, characterized in that there is fastened to the associated rail (28) a leaf spring (68) which is located on the side of this rail (28), opposite the teeth (42) and engages with precise fit in a cutout on the inside of the lug (46).

7. Longitudinal adjusting arrangement according to Claim 5, characterized in that an undulate pressure spring (70) is arranged between the underside of the toothed rack (26) and the face facing it of the floor rail (28).

8. Longitudinal adjusting arrangement according to Claim 7, characterized in that the spring (70) is guided through a guide hole (47) of the floor rail (28), is supported by means of a loop or a limit shoulder against the opposite outer face of the floor rail (28), and has a resilient region which bears resiliently against a supporting face (78) of the lug (46).

## Revendications

1. Mécanisme de déplacement longitudinal pour sièges de véhicule automobile, comportant un moteur d'entraînement (20) qui, par un arbre (22), entraîne un pignon (24), ainsi qu'une crémaillère (26) qui est en prise avec ce pignon (24), comportant deux rails (28, 30) allongés, guidés l'un dans l'autre et déplacables l'un contre l'autre, dans une direction de déplacement (33), dont un rail (30) porte l'arbre (22) et le pignon (24) et l'autre est relié à la crémaillère (26), cette liaison s'effectuant dans une zone de fixation (34) dans laquelle la crémaillère (26) est fixée contre le rail (28), dans la direction de déplacement (33), ainsi que dans une zone de maintien (36) dans laquelle la crémaillère (26) est mobile, dans la direction de ses dents (42), par rapport au rail (28), caractérisé en ce que la crémaillère (26) est précontrainte élastiquement en direction du pignon (24), par un mécanisme séparé à ressort de pression (68, 70), en ce que la crémaillère (26) est comprimée, en tout point du parcours de déplacement, sous l'effet d'une force inférieure à celle qui et nécessaire pour déformer l'organe de guidage longitudinal formé par les deux rails (28, 30), et en ce qué le pignon (24) et la crémaillère (26) sont logés a l'interieur de l'organe de guidage longitudinal formé par les deux rails (28, 30).

2. Dispositif de déplacement longitudinal selon la revendication 1, caractérisé en ce que le tenon (52) s'applique, par deux courbures (66), contre les parois de l'évidement ajusté (50), en coulissant dans la direction des dents (42).

3. Dispositif de déplacement longitudinal selon la revendication 1 ou 2, caractérisé en ce qu'une zone de maintien (36) comporte, dans la direction opposée aux dents (42), un tenon (46) faisant saillie sur la crémaillère (26) et de préférence d'une seule pièce, lequel s'engage dans un trou de guidage (47) du rail correspondant (28), de manière que dans la direction de déplacement (33), il reste, des deux côtés du tenon (46), une fente et que le tenon (46) s'applique, mais pratiquement sans jeu, contre les parois du trou de guidage (47), transversales a la direction de déplacement (33).

4. Dispositif de déplacement longitudinal selon la revendication 3, caractérisé par deux zones de maintien (36) dont une au moins est prévue à l'une des extrémités de la crémaillère (26), tandis que l'autre se trouve au milieu ou sur l'autre extrémité de la crémaillère (26).

5. Dispositif de placement longitudinal selon l'une des revendications 1 à 4, caractérisé en ce qu'un ressort séparé (68, 70) est associé aux zones de maintien (36) terminales.

6. Dispositif de déplacement longitudinal selon la revendication 5, caractérisé en ce qu'un ressort à lame (68) qui se trouve sur le côté opposé aux dents (42) du rail (28), et s'engage de manière ajustée dans un évidement pratiqué sur la face intérieure des tenons (46), est fixé sur le rail correspondant (28).

7. Dispositif de déplacement longitudinal selon la revendication 5, caractérisé en ce qu'un ressort de pression ondulé (70) est placé entre la face inférieure de la crémaillère (26) et la face tournée vers celle-ci du rail de fond (28).

8. Dispositif de déplacement longitudinal selon la revendication 7, caractérisé en ce que le ressort (70) passe à travers un trou de guidage (47) du rail de plancher (28), prend appui par une boucle ou un épaulement de butée, contre la face extérieure opposée du rail de plancher (28) et présente une zone élastique qui s'applique de manière élastique contre une surface d'appui (78) du tenon (46).
